# EUROPÄISCHE PATENTSCHRIFT

(11) **EP 0 907 515 B1**
(45) Veröffentlichungstag und Bekanntmachung des Hinweises auf die Patenterteilung: **26.04.2000**
(21) Anmeldenummer: 97925001.6
(22) Anmeldetag: 28.05.1997
(51) Int. Cl.: B41F 21/08, B41F 13/03, B65H 29/00, B65H 29/02

(54) **BOGENTRANSPORTSYSTEM FÜR EINE ROTATIONSDRUCKMASCHINE**
SHEET CONVEYER FOR A ROTARY PRESS
SYSTEME DE TRANSPORT DE FEUILLE POUR UNE PRESSE ROTATIVE

(30) Priorität: 29.05.1996 DE 19621507
(43) Veröffentlichungstag der Anmeldung: 14.04.1999
(73) Patentinhaber: Heidelberger Druckmaschinen Aktiengesellschaft, 69115 Heidelberg (DE)
(72) Erfinder: KRÜGER, Michael, D-68535 Edingen-Neckarhausen (DE); LAUBSCHER, Hans-Jörg, D-67227 Frankenthal (DE)
(86) Internationale Anmeldenummer: EP9702750
(87) Internationale Veröffentlichungsnummer: WO9745267

(56) Entgegenhaltungen:
- EP-A- 0 544 088
- DE-A- 2 501 963
- US-A- 5 047 676

## Beschreibung

Die Erfindung betrifft ein Bogentransportsystem, eine Vortriebseinrichtung, eine Bahneinzugsvorrichtung sowie ein Transportgreifersystem für eine Rotationsdruckmaschine gemäß dem Oberbegriff von Anspruch 1, 2, 23, 24, 25, 26 und 27.

Bogentransportsysteme für Rotationsdruckmaschinen sind aus dem Stand der Technik bekannt und werden beispielsweise im Anlegerbereich einer Druckmaschine zum Abnehmen eines Bogens vom Bogenstapel und Zuführen desselben zu einem ersten Druckwerk eingesetzt. Weiterhin ist es bekannt, Bogentransportsysteme zum Transport der Bogen innerhalb der Druckmaschine von Druckwerk zu Druckwerk oder zum Transport der Bogen vom letzten Druckwerk zum Auslegerstapel im Auslegerbereich einzusetzen, wobei der Transport der Bogen in den unterschiedlichen Druckmaschinenabschnitten in der Regel durch unterschiedlich ausgebildete Bogentransportsysteme erfolgt. So werden im Anlegerbereich mechanisch angetriebene, im wesentlichen geradlinig bewegte Saugeinrichtungen in Form von Hub- und Schleppsaugern verwendet. Zwischen den Druckwerken, d.h. innerhalb der Druckmaschine erfolgt der Bogentransport dann üblicherweise durch Bogenüberführzylinder oder Trommeln mit daran angeordneten Greifereinrichtungen. Im Auslegerbereich werden die Bogen schließlich durch Greiferbrücken transportiert, die an zwei parallel zueinander angeordneten umlaufenden Endlosketten befestigt sind.

Aus der DE-OS 25 01 963 ist es ferner bekannt, die Bogen mit Hilfe eines Bogentransportsystems in Form eines Greiferwagens mit einer daran angeordneten Greiferbrücke durch die gesamte Druckmaschine zu transportieren. Der Antrieb des Greiferwagens erfolgt dabei durch erste und zweite Vortriebselemente, die in zugehörigen beidseitig im Gehäuse der Druckmaschine verlaufenden endlosen Führungsschienen geführt sind und die den Läufer eines elektrischen Linearmotors bilden. Entlang der beiden Führungsschienen erstrecken sich endlose Statorspulen,

die ein elektromagnetisches Wanderfeld zum Vortrieb des Greiferwagens erzeugen. Hierbei kann es vorgesehen sein, daß die Spulen in mehrere, den jeweiligen Druckwerken zugeordnete elektrisch unabhängige Teilabschnitte unterteilt sind, um die Geschwindigkeit des Greiferwagens beispielsweise beim Passieren eines Druckspalts mit einer höheren Genauigkeit steuern zu können. Nachteilig bei dem beschriebenen Bogentransportsystem ist es, daß die Statorspulen als endlose Spulen ausgebildet sind, was zu einem hohen elektrischen Leistungsbedarf führt und einen vergleichsweise großen Steuerungs- und Regelungsaufwand und damit verbundene Kosten erforderlich macht. So ist es insbesondere zur Erzielung einer passerhaltigen Zufuhr der Bogen in die Druckspalte der jeweiligen Druckwerke erforderlich, jede einzelne Wicklung der endlosen Spule durch eine separate Steuereinrichtung anzusteuern, um die erforderliche Genauigkeit zu erhalten.

Durch die Erfindung soll die Aufgabe gelöst werden, ein Bogentransportsystem für Rotationsdruckmaschinen zu schaffen, das sich universell in den einzelnen Teilabschnitten einer Druckmaschine einsetzen läßt, dessen Bewegung mit der für einen passerhaltigen Bogentransport in einer Druckmaschine erforderlichen Genauigkeit erfolgt und das neben einem verringerten Vorrichtungsaufwand zum Steuern und Regeln der Vortriebsbewegung einen vergleichsweise geringen elektrischen Leistungsbedarf aufweist

Erfindungsgemäß wird die Aufgabe durch die Merkmale von Anspruch 1, 2, 23, 24, 25, 26 und 27 gelöst.

Gemäß einer ersten Ausführungsform der Erfindung umfaßt ein Bogentransportsystem für eine Rotationsdruckmaschine eine Bogenhaltemittel aufweisende Bogentransportvorrichtung, deren Vortrieb durch ein in einer ersten Führungsschiene geführtes erstes Vortriebselement sowie ein in einer im wesentlichen parallel zur ersten Führungsschiene verlaufenden zweiten Führungsschiene geführtes zweites Vortriebselement erfolgt, wobei die ersten und zweiten Vortriebselemente die Läufer eines elektrischen Linearantriebs bilden und die ersten und zweiten Vortriebselemente durch jeweils mindestens zwei gelenkig miteinander verbundene Einzelglieder enthaltende Gliederketten aus magnetisierbarem, vorzugsweise permanentmagnetischem Material gebildet werden. An den ersten und zweiten Führungsschienen sind mehrere den Stator des Linearantriebs bildende Antriebsstationen vorgesehen, deren Abstand zueinander zumindest abschnittsweise im wesentlichen kleiner oder gleich der Länge der Vortriebselemente ist, wobei die Bewegung der ersten und zweiten Vortriebselemente durch eine den Antriebsstationen zugeordnete Steuerungseinrichtung gesteuert und geregelt wird.

Anstelle der Einzelelemente aus magnetisierbarem Material kann es hierbei ebenso vorgesehen sein, die Einzelglieder der Gliederketten durch geschlossene Leiterschleifen zu ersetzen, wobei der Liniearantrieb in diesem Falle als bekannter Asynchronantrieb ausgebildet ist.

Gemäß einer weiteren Ausführungsform der Erfindung werden die Vortriebselemente durch flexible Bänder aus magnetisierbarem Material, vorzugsweise Weicheisen, gebildet, welche Schlitze oder andere Inhomogenitäten aufweisen. Der Antrieb der Vortriebselement erfolgt bei dieser Ausführungsform der Erfindung nach dem bekannten Reluktanzprinzip.

Gemäß einer bevorzugten Anwendung des erfindungsgemäßen Bogentransportsystems ist dieses zwischen einem vorgeordneten und einem nachgeordneten Druckwerk einer Druckmaschine angeordnet, wobei die Bogenhaltemittel durch Greifereinrichtungen gebildet werden, die einen Bogen von Greifereinrichtungen des vorgeordneten Druckwerks übernehmen und an Greifereinrichtungen des nachgeordneten Druckwerks übergeben.

Weiterhin kann das erfindungsgemäße Bogentransportsystem in gleicher Weise im Bereich des Auslegers einer Druckmaschine angeordnet sein, wobei die Bogenhaltemittel durch Greifereinrichtungen gebildet werden, die einen Bogen von einem vorgeordneten Druckwerk übernehmen und auf einem Stapel ablegen. Hierbei steuert die Steuerungseinrichtung die Bewegung der Vortriebselemente beim Einsatz von mehreren Bogentransportvorrichtungen im Bereich des Bogenstapels vorzugsweise in der Weise, daß die Abstände zwischen zwei aufeinander folgenden Bogentransportvorrichtungen kleiner sind als die Länge eines transportierten Bogens, derart, daß sich eine Schuppenformation der abgelegten Bogen bildet.

Gemäß einer weiteren bevorzugten Anwendung des erfindungsgemäßen Bogentransportsystems ist dieses im Bereich des Anlegers einer Druckmaschine angeordnet, wobei die Bogenhaltemittel der Bogentransportvorrichtung durch Saugeinrichtungen gebildet werden, die die zu transportierenden Bogen von einem Bogenstapel abnehmen und einem ersten Druckwerk der Druckmaschine zuführen. Hierbei kann es vorgesehen sein, daß die Steuerungseinrichtung die Geschwindigkeit der ersten und zweiten Vortriebselemente während eines Umlaufs der Bogentransportvorrichtung in der Weise verändert, daß die Geschwindigkeit der Bogentransportvorrichtung beim Ansaugen und Abnehmen eines Bogens vom Bogenstapel verringert ist und anschließend auf einen vorgegebenen Wert erhöht wird.

Gemäß einer weiteren Ausführungsform der Erfindung umfaßt eine erfindungsgemäße Vortriebseinrichtung für ein Transportsystem an einer Rotationsdruckmaschine wenigstens eine Führungsschiene sowie ein in der Führungsschiene geführtes, den Läufer eines elektrischen Linearantriebs bildendes Vortriebselement. Außerhalb der Führungsschiene sind mehrere elektrische Spulen enthaltende Antriebsstationen angeordnet, welche den Stator des elektrischen Linearantriebs bilden, wobei das Vortriebselement vorzugsweise durch eine Gliederkette gebildet wird, die jeweils mindestens zwei gelenkig miteinander verbundene Einzelglieder aus magnetisierbarem Material aufweist. Die Antriebsstationen sind zumindest abschnittsweise in einem Abstand zueinander angeordnet, der kleiner oder gleich der Länge des Vortriebselementes ist, wobei den Antriebsstationen eine Steuerungseinrichtung zugeordnet ist, die die Bewegung des Vortriebselementes entlang der Führungsschienen steuert und regelt.

Anstelle der Einzelelemente aus magnetisierbarem Material kann es bei dieser Ausführungsform eines Vortriebselements ebenso vorgesehen sein, die Einzelglieder der Gliederketten durch geschlossene Leiterschleifen zu ersetzen und den Liniearantrieb in diesem Falle als bekannten Asynchronantrieb auszubilden.

Bei dieser Ausführungsform kann es in gleicher Weise vorgesehen sein, daß das Vortriebselement durch ein flexibles, mit Schlitzen versehenes Band aus magnetisierbarem Material gebildet wird, wobei der Linearantrieb in diesem Falle nach dem Reluktanzprinzip arbeitet.

Eine erfindungsgemäße Vortriebseinrichtung, welche durch zumindest ein Vortriebselement und eine Führungsschiene sowie zugehörige Antriebsstationen gebildet wird, wird bevorzugter Weise als Zugeinrichtung bzw. als Antrieb einer bekannten Bahneinzugseinrichtung in einer Rollenrotationsdruckmaschine eingesetzt.

In gleicher Weise ist es möglich, die erfindungsgemäße Vortriebseinrichtung als Transportgreifersystem, bzw. als Antrieb für ein bekanntes Transportgreifersystem für Druckereiprodukte einzusetzen, wie es beispielsweise in Weiterverarbeitungseinrichtungen wie Bindereien etc. zum Transport der fertigen Druckereiprodukte verwendet wird.

Gemäß einer weiteren Ausführungsform der Erfindung ist der Abstand zwischen zwei Antriebsstationen über einen oder mehrere Teilabschnitte der Führungsschienen hinweg größer als die Länge der Vortriebselemente, so daß die Bewegung der Vortriebselemente in diesem Teilabschnitt im wesentlichen antriebslos allein durch die Bewegungsenergie der oder des Vortriebselements erfolgt.

Weitere Merkmale der Erfindung sind in den Unteransprüchen enthalten.

Die Erfindung wird nachfolgend mit Bezug auf die Zeichnungen anhand bevorzugter Ausführungsformen beschrieben. In den Zeichnungen zeigen:
- Fig. 1: eine schematische Draufsicht auf ein erfindungsgemäßes Bogentransportsystem mit einer Greiferbrücke, wie es beispielsweise zwischen den Druckwerken oder im Auslegerbereich eingesetzt wird,
- Fig. 2: eine schematische Seitenansicht des Bogentransportsystems von Fig. 1,
- Fig. 3: eine schematische dreidimensionale Darstellung einer weiteren Ausführungsform eines erfindungsgemäßen Bogentransportsystems mit Greifereinrichtungen, bei der die Vortriebselemente durch flexible Bänder aus magnetisierbarem Material gebildet werden,
- Fig. 4: eine schematische Seitenansicht zweier Druckwerke einer Bogenrotationsdruckmaschine, zwischen denen ein erfindungsgemäßes Bogentransportsystem mit Vielzahl von umlaufenden Bogentransportvorrichtungen und mehreren Bahnpfaden sowie den Bahnpfaden zugeordneten Trocknereinrichtungen angeordnet ist,
- Fig. 5: ein im Auslegerbereich einer Druckmaschine angeordnetes Bogentransportsystem mit Trocknereinrichtungen sowie einer Vielzahl von umlaufenden Bogentransportvorrichtungen,
- Fig. 6: eine schematische Darstellung eines erfindungsgemäßen Bogentransportsystems mit Saugeinrichtungen, welches im Anlegerbereich einer Druckmaschine angeordnet ist.

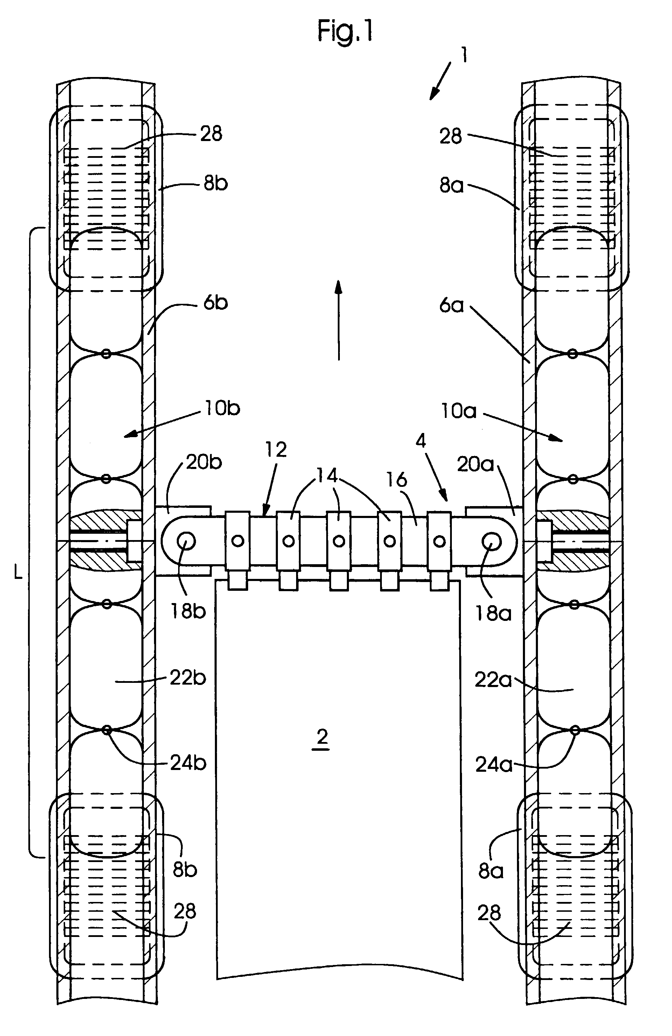

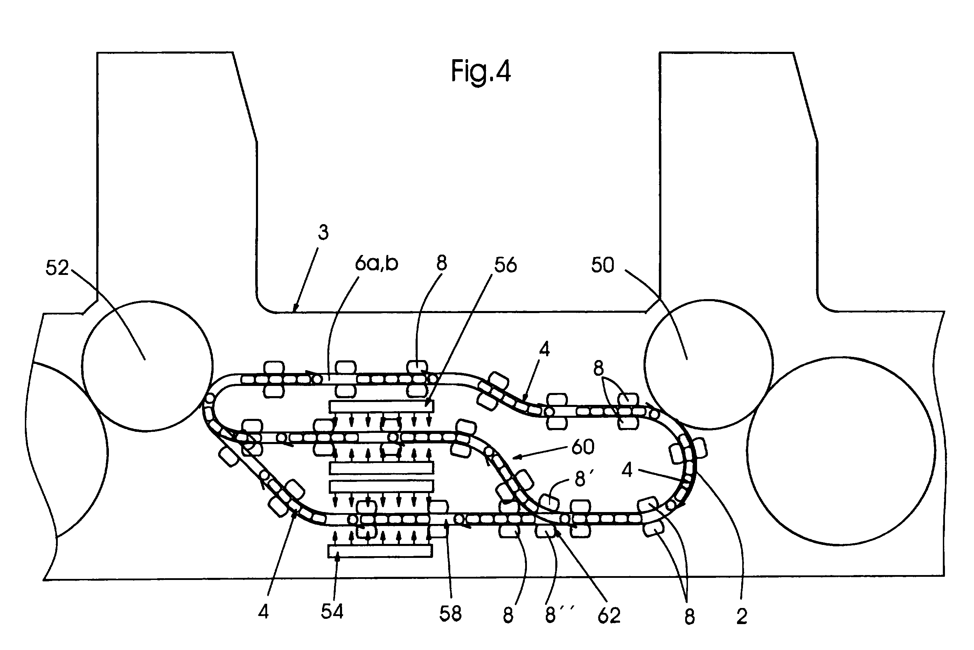

Das in Fig. 1 dargestellte erfindungsgemäße Bogentransportsystem 1 zum Transport eines Bogens 2 in einer z.B. in Figur 4 gezeigten Druckmaschine 3, insbesondere einer Bogenrotationsdruckmaschine, umfaßt eine Bogentransportvorrichtung 4, erste und zweite im wesentlichen parallel zueinander verlaufende Führungsschienen 6a, 6b sowie in einem Abstand D voneinander entlang der Führungsschienen 6a, 6b angeordnete Antriebsstationen 8a, 8b.

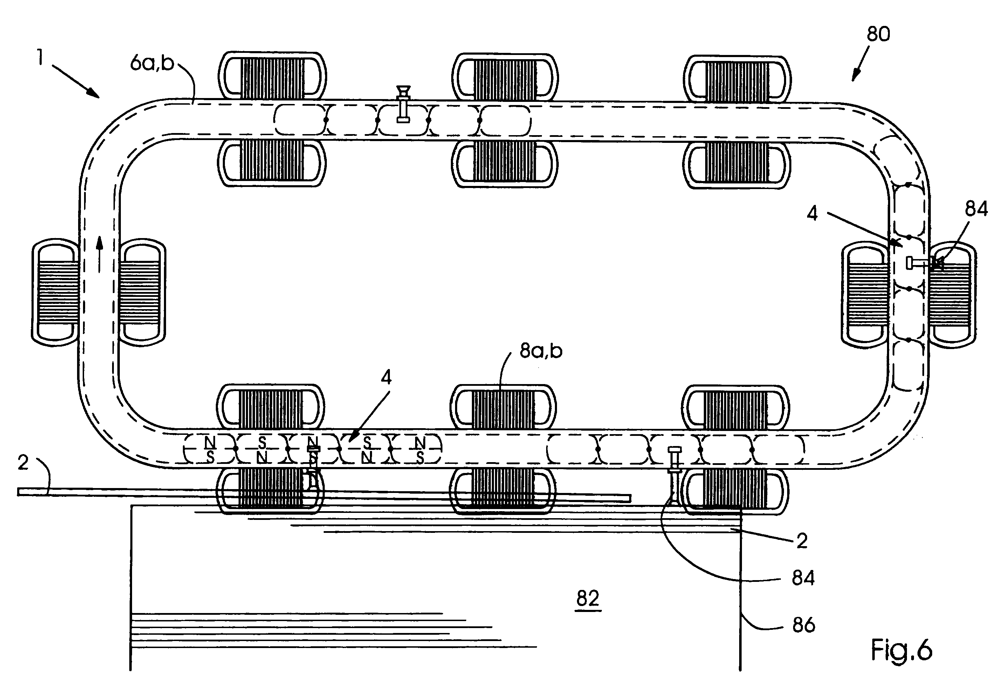

Die erfindungsgemäße Bogentransportvorrichtung 4 des Bogentransportsystems 1 besitzt ferner ein erstes in der ersten Führungsschiene 6a geführtes Vortriebselement 10a sowie ein in der zweiten Schiene 6b geführtes zweites Vortriebselement 10b sowie die beiden Vortriebselemente 10a, 10b miteinander verbindende und sich im wesentlichen über die Breite der Druckmaschine, bzw. der nicht dargestellten Druckwerkszylinder erstreckende Bogenhaltemittel 12. Die Bogenhaltemittel 12 können beispielsweise durch in Bogenrotationsdruckmaschinen üblicherweise eingesetzte Greifer 14, z.B. Zangengreifer, die an einer Traverse 16 befestigt sind, gebildet werden. In gleicher Weise können die Haltemittel 12 jedoch auch durch an der Traverse 16 befestigte Sauger oder Sauggreifer, z.B. die in Figur 6 gezeigten Sauger 84 gebildet werden, wie sie beispielsweise aus dem Anlegerbereich von Bogendruckmaschinen bekannt sind.

Bei der bevorzugten Ausführungsform der Erfindung werden das erste und das zweite Vortriebselement durch in Fig. 1 gezeigte Gliederketten mit mindestens zwei, vorzugsweise jedoch fünf oder mehr Einzelgliedern 22a, 22b gebildet. Die Einzelglieder 22a, 22b bestehen aus magnetisierbarem Material und können als Permanentmagnete mit Polen N, S, z.B. aus Samarium-Kobalt, Neodymeisenbor oder einem sonstigen bekannten dauermagnetischen Werkstoff mit einer nach Möglichkeit großen Energiedichte ausgebildet sein. Weiterhin ist es möglich, die Einzelglieder 22a, 22b lediglich aus einem ferrromagnetischem Werkstoff, beispielsweise Weicheisen zu fertigen, wobei der Linearantrieb nach dem im Stand der Technik bekannten Reluktanzprinzip arbeitet.

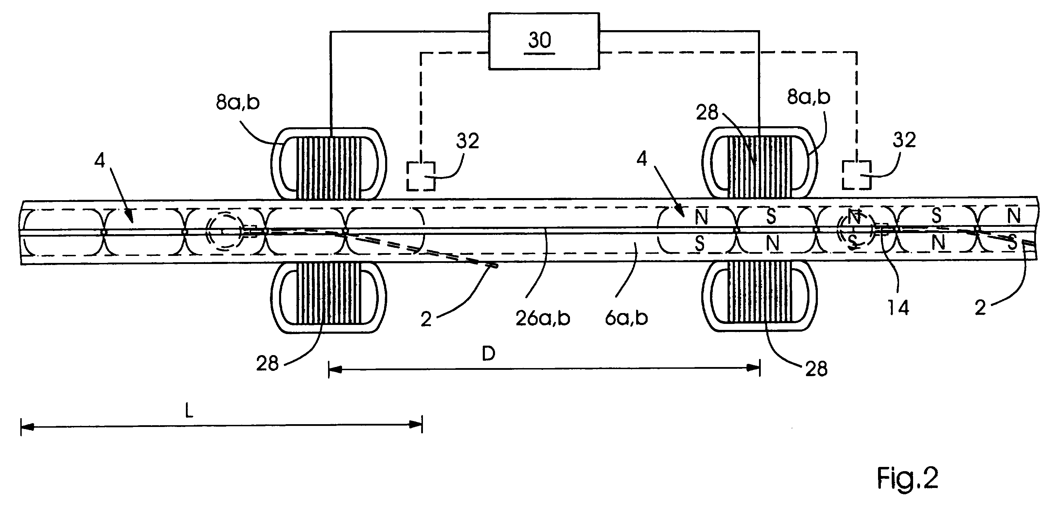

Die Einzelglieder 22a, 22b der Vortriebselemente 10a, 10b sind über Gelenke 24a, 24b beweglich miteinander verbunden. Die Gelenke 24a, 24b können beispielsweise als bekannte Kugelkopfgelenke oder aber als einfache, zwei aufeinander folgende Einzelglieder 22a, 22b miteinander verbindende Bänder, beispielsweise Kunststoff- oder Gummibänder ausgebildet sein. Die Einzelglieder 22a, 22b weisen einen vorzugsweise kreisförmigen Querschnitt auf und werden in der ersten und zweiten Führungsschiene 6a, 6b spielfrei geführt. An jeweils einem der Einzelglieder 22a, 22b der ersten und zweiten Vortriebselemente 10a, 10b, welches vorzugsweise in der Mitte der Vortriebselemente 10a, 10b angeordnet ist, sind einander gegenüberliegende Vorsprünge 20a, 20b gebildet, an welchen die Traverse 16 befestigt ist. Wie in Fig. 1 gezeigt, erfolgt die Befestigung der Traverse 16 an den Vorsprüngen 20a, 20b vorteilhafterweise durch Gelenke 18a, 18b, so daß durch Verändern der Relativposition des ersten und zweiten Vortriebselements 10a, 10b eine Schrägregisterkorrektur des transportierten Bogens 2 vorgenommen werden kann. Die Führungsschienen 6a, 6b besitzen eine der Querschnittsform der Einzelglieder 22a, 22b angepaßte Querschnittsform, wobei sich die an jeweils einem der Einzelglieder jeden Vortriebselements 10a, 10b befestigten Vorsprünge 20a, 20b durch einen in den Führungsschienen 6a, 6b gebildeten und in Fig. 2 dargestellten Längsschlitz 26a, 26b nach außen erstrecken. Um eine bessere Gleitführung zu erzielen, können die Körper der Einzelglieder 22a, 22b sowie die Innenflächen der Führungsschienen 6a, 6b mit einer bekannten Gleitbeschichtung, beispielsweise mit einer Teflonbeschichtung, überzogen sein.

Die Antriebsstationen 8a, 8b sind, wie in Fig. 2 dargestellt, vorzugsweise paarweise oberhalb und unterhalb der Führungsschienen 6a, 6b angeordnet und enthalten bekannte elektromagnetische Spulen 28, die über eine schematisch dargestellte Steuerungs- und Regelungseinrichtung 30 mit Strom versorgt werden und ein elektromagnetisches Wanderfeld zum Vortrieb der Bogentransportvorrichtung 4 erzeugen. Anders ausgedrückt bilden die Antriebsstationen 8a, 8b mit den Spulen 28 den Stator und die Vortriebselemente 10a,10b mit ihren Einzelgliedern 22a, 22b aus magnetisierbarem Material den Läufer eines elektrischen Linearmotors oder Linearantriebs. Die Antriebsstationen 8a, 8b an den beiden Führungsschienen 6a, 6b können auf verschiedenste Art und Weise ausgebildet sein. So können die Spulen 28 der Antriebsstationen 8a, 8b die zugehörige Führungsschiene 6a, 6b beispielsweise auf der dem Schlitz 26a, 26b abgewandten Seite U- oder C-förmig umgreifen. In gleicher Weise ist es denkbar, jede der Antriebsstationen 8a, 8b als lediglich oberhalb und unterhalb der Führungsschienen 6a, 6b angeordnete Spulenpaare auszubilden; oder in den Antriebsstationen 8a, 8b Spulen mit bekannter Querfluß- oder Transversalflußanordnung zu verwenden. Die Wahl der Spulen hängt von der Art des eingesetzten Linearantriebs ab.

Die Anzahl der Einzelglieder 22 der ersten und zweiten Vortriebselemente 10a, 10b ist bei der in den Figuren 1 und 2 dargestellten Ausführungsform der Erfindung vorzugsweise derart gewählt, daß die Länge L eines Vortriebselements 10a, 10b im wesentlichen dem Abstand D zwischen zwei Antriebsstationen 8a, 8b an einer der Führungsschienen 6a, 6b entspricht, so daß die Vortriebselemente 10a, 10b wegen der Ausdehnung der Antriebsstationen 8a, 8b ständig im Wirkungsbereich des Wanderfeldes sind. Jedoch kann es in gleicher Weise vorgesehen sein, daß der Abstand D zwischen zwei Antriebsstationen 8a, 8b einer Führungsschiene 6a, 6b zumindest abschnittsweise kleiner als die Länge L eines zugeordneten Vortriebselements 10a, 10b ist.

Weiterhin kann der Abstand D zwischen zwei Antriebsstationen 8a, 8b an einer Führungsschiene 6a, 6b zumindest abschnittsweise größer sein als die Länge L eines Vortriebselements 10a, 10b, so daß sich das Vortriebselement 10a, 10b vollständig außerhalb der Antriebsstationen 8a, 8b und damit außerhalb des Wirkungsbereichs des elektromagnetischen Wanderfeldes befindet. Bei dieser Ausführungsform der Erfindung erfolgt der Vortrieb der erfindungsgemäßen Bogentransportvorrichtung zwischen zwei Antriebsstationen 8a, 8b der ersten und zweiten Führungsschienen 6a, 6b allein durch die Bewegungsenergie, die ihr bzw. den ersten und zweiten Vortriebselementen 10a, 10b in einer der vorgeordneten Antriebsstationen 8 zugeführt wurde. So kann es beispielsweise vorteilhaft sein, die Antriebsstationen 8 im Bereich zwischen zwei Druckwerken, in dem eine genaue Positionierung der Transportvorrichtung 4 nicht erforderlich ist, in einem Abstand von beispielsweise dem Zwei- bis Zehnfachen der Länge L eines Vortriebselementes 10a, 10b anzuordnen. Hierdurch läßt sich die Zahl der Antriebsstationen 8 und damit der Vorrichtungsaufwand weiter reduzieren. In Bereichen, in denen die Transportvorrichtung 4 mit einer hohen Präzision und Genauigkeit bewegt werden muß, beispielsweise in Bereichen, in denen eine passerhaltige Übergabe eines bedruckten Bogens an ein nachgeordnetes Druckwerk erfolgt, können hingegen mehrere Antriebsstationen 8 unmittelbar oder in dichtem Abstand hintereinander angeordnet werden.

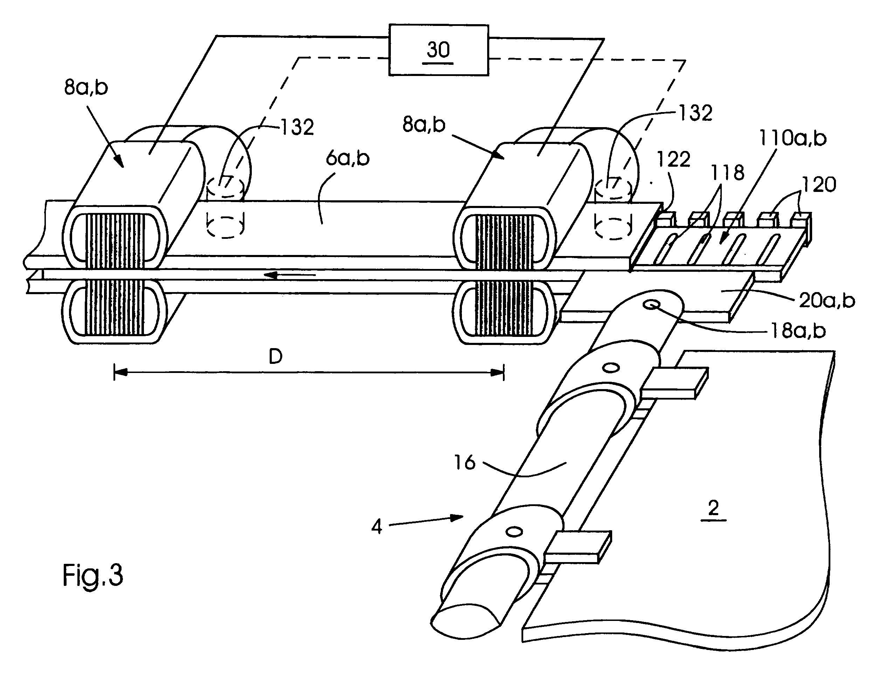

Bei einer weiteren in Fig. 3 gezeigten Ausführungsform der Erfindung kann es ferner vorgesehen sein, die Vortriebselemente 10a, 10b der in Fig. 1 und Fig. 2 gezeigten Ausführungsform als durchgehende, mit Schlitzen 118 versehen Bänder oder Streifen 110a, 110b aus flexiblem, magnetisierbarem Material, z.B. Weicheisen oder einem ähnlichen Werkstoff mit ferromagnetischen Eigenschaften auszubilden. In gleicher Weise wie im Zusammenhang mit der zuvor beschriebenen gliederkettenförmigen Ausführungsform der Erfindung können die Vortriebselemente 110a, 110b auch als Permanentmagnete ausgebildet sein oder solche enthalten, die beispielsweise aus Samarium-Kobalt, Neodymeisenbor oder einem sonstigen dauermagnetischen Werkstoff, vorzugsweise aus der Gruppe der seltenen Erden gebildet sind. Die Streifen 110a, 110b können zur verbesserten Führung der Vortriebselemente zusätzliche Führungskörper 120 aufweisen, die in einer zugehörigen Führung 122 der vorzugsweise flach ausgebildeten Führungsschiene 6a, 6b geführt werden. In gleicher Weise wie die durch Gliederketten gebildeten Vortriebselemente 10a, 10b der Ausführungsform nach Fig. 1 und 2 weisen die bandförmigen Vortriebselemente 110a, 110b der in Fig. 3 dargestellten Ausführungsform der Erfindung bei der bevorzugten Ausführungsform eine Länge L auf, die im wesentlichen dem Abstand D zwischen zwei Antriebsstationen 8a, 8b an einer Führungsschiene 6a, 6b entspricht. Der Abstand D kann jedoch wie oben beschrieben auch kleiner bzw. abschnittsweise größer als die Länge L sein.

Schließlich kann es bei einer weiteren Ausführungsform der Erfindung ebenso vorgesehen sein, anstelle der Einzelglieder aus magnetisierbarem Material Einzelglieder zu verwenden, die durch geschlossene Leiterschleifen gebildet werden. In diesem Falle arbeitet der Liniearantrieb nach dem bekannten Asynchronprinzip.

Bei der bevorzugten Ausführungsform der Erfindung sind, wie in Fig. 1 bis 3 gezeigt, vorzugsweise vor den Antriebsstationen 8a, 8b Sensoren 32, 132 angeordnet, die mit der Steuerungs- und Regelungseinrichtung 30 verbunden sind und die die Geschwindigkeit und/oder die genaue Position der ersten und zweiten Vortriebselemente 10a, 10b bzw. 110a, 110b innerhalb der zugehörigen Führungsschienen 6a, 6b erfassen. Die Steuerungs- und Regelungseinrichtung 30 steuert und regelt das elektromagnetische Wanderfeld der Antriebsstationen 8a, 8b der ersten und zweiten Führungsschienen 6a, 6b in Abhängigkeit von der durch die Sensoren 32, 132 erfaßten Geschwindigkeit und/oder Position in der Weise, daß die Transporteinrichtung 4 eine vorgegebene Vortriebsbewegung durchführt.

Obwohl die Steuerungs- und Regelungseinrichtung 30 einander gegenüberliegende Antriebsstationen 8a, 8b der ersten und zweiten Führungsschiene 6a, 6b gemeinsam paarweise ansteuern und regeln kann, erfolgt die Steuerung und Regelung der ersten Antriebsstationen 8a bei der bevorzugten Ausführungsform der Erfindung vorzugsweise unabhängig von der Steuerung und Regelung der zweiten Antriebsstationen 8b. Anders ausgedrückt lassen sich bei der bevorzugten Ausführungsform der Erfindung die ersten und zweiten Vortriebselemente 10a, 10b bzw. 110a, 110b unabhängig voneinander steuern und regeln, wodurch es beispielsweise ermöglicht wird, die Relativposition des ersten Vortriebselements 10a, 110a in Bezug auf das zweite Vortriebselement 10b, 110b zu verändern und dadurch beispielsweise eine Schrägregisterkorrektur des Bogens in den nachfolgenden Druckwerken vorzunehmen. Weiterhin ist es bei dieser Ausführungsform der Erfindung möglich, die Geschwindigkeit der ersten und zweiten Vortriebselemente 10a, 10b, 110a, 110b um den gleichen Betrag zu erhöhen, um hierdurch beispielsweise eine Geschwindigkeits- und Positionskorrektur der erfindungsgemäßen Bogentransportvorrichtung 4 gleichzeitig durchzuführen.

Die in Fig. 1 und 2 gezeigte Bogentransportvorrichtung 4 kann erfindungsgemäß in unterschiedlichen Abschnitten einer Druckmaschine eingesetzt werden, ohne das ihr zugrundeliegende Prinzip zu verlassen.

Wie in Fig. 4 dargestellt, ist es beispielsweise möglich, das erfindungsgemäße Bogentransportsystem zwischen einem vorgeordneten und einem nachgeordneten Druckwerk einer Bogenrotationsdruckmaschine anzuordnen, wobei die Führungsschienen 6a, 6b als geschlossene Endlosschienen ausgebildet sein können. Innerhalb der Schienen 6a, 6b laufen hierbei mehrere Transportvorrichtungen 4 um, die einen Bogen 2 von einem Gegendruckzylinder 50 des vorgeordneten Druckwerks übernehmen und an die Greifereinrichtungen eines Gegendruckzylinders 52 des nachgeordneten Druckwerks übergeben. Hierbei kann es vorgesehen sein, daß oberhalb und unterhalb der Führungsschienen 6a, 6b Trocknereinrichtungen 54, 56, beispielsweise in Form von bekannte IR-Trocknern oder Heißlufttrocknern, vorgesehen sind, die die Oberseite und gegebenenfalls die Unterseite eines bedruckten Bogens 2 trocknen. Gemäß einer weiteren Ausführungsform der Erfindung kann es vorgesehen sein, daß die Geschwindigkeit der Bogentransportvorrichtungen 4 im Bereich der Trocknereinrichtungen 54, 56 durch die Steuerungs- und Regelungseinrichtung 30 reduziert wird, um die Durchlaufzeit durch die Trocknereinrichtungen 54, 56 zu verlängern und dadurch die Trocknungszeit und damit den Trocknungseffekt zu erhöhen.

Weiterhin kann es vorgesehen sein, daß die ersten und zweiten Führungsschienen 6a, 6b in zwei unabhängige nebeneinander verlaufende Schienenpfade oder Bahnpfade 58, 60 aufgeteilt sind, wodurch sich die Geschwindigkeit der Bogentransportvorrichtung 4 im Bereich der Trocknereinrichtungen 54, 56 nochmals um einen Faktor 2 reduzieren läßt. Die Schienenpfade 58, 60 verlaufen vorzugsweise horizontal und parallel zueinander, wobei die Trocknereinrichtungen 54, 56 oberhalb und unterhalb eines jeden Pfades angeordnet sein können, wie dies in Fig. 4 gezeigt ist. Um die Transportvorrichtungen 4 wechselweise dem oberen Schienenpfad 60 und dem unteren Schienenpfad 58 zuzuführen, ist in Bogentransportrichtung gesehen vor den Schienenpfaden 58, 60 eine bekannte Weiche 62 angeordnet.

Die Weiche 62 kann beispielsweise durch zwei zusätzliche Antriebsstationen 8' und 8" gebildet werden, die am Anfang des jeweiligen Schienenpfades 58, 60 angeordnet sind und die von der Steuerungs- und Regelungseinrichtung 30 entsprechend dem einzuschlagenden Bahnweg wechselweise bestromt werden, wodurch das vorlaufende Ende der Vortriebselemente 10a, 10b, 110a, 110b durch die darauf wirkenden senkrecht zur Vortriebsrichtung gerichteten Kraftkomponenten des elektromagnetischen Feldes entsprechend in den einen oder den anderen Schienenpfad 58, 60 gezogen wird.

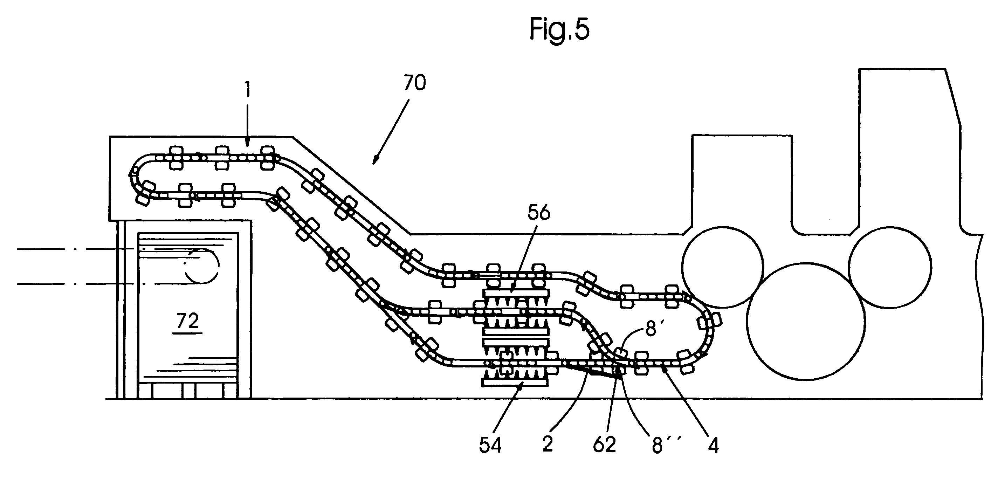

Weiterhin kann es vorgesehen sein, das erfindungsgemäße Bogentransportsystem 1 im Bereich eines Auslegers 70 einer bekannten Bogenrotationsdruckmaschine einzusetzen, bzw. dieses als Ausleger auszubilden, wie dies in Fig. 5 dargestellt ist. Bei dieser Ausführungsform der Erfindung, welche im wesentlichen der im Zusammenhang mit Fig. 4 beschriebenen, zwischen zwei Druckwerken eingesetzten Ausführungsform eines erfindungsgemäßen Bogentransportsystems entspricht, werden die bedruckten Bogen 2 von den Transportvorrichtungen 4 vom letzten Druckwerk übernommen und auf einem Bogenstapel 72 oder einem nicht dargestellten Transportband abgelegt. Hierbei kann es vorteilhafterweise vorgesehen sein, daß die Steuerungs- und Regelungseinrichtung 30 den Abstand zwischen zwei aufeinanderfolgenden Bogentransportvorrichtungen 4 im Bereich des Stapels 72 oder Transportbandes in der Weise verringert, daß dieser kleiner als die Länge eines Bogens 2 ist, so daß die bedruckten Bogen 2 als Schuppenformation abgelegt werden. Dadurch kann die Ablagegeschwindigkeit der Bogen im Ausleger 70 weiter in vorteilhafter Weise reduziert werden. Durch die Ablage des Bogens als Schuppenformation ergibt sich insbesondere bei der Weiterverarbeitung, z.B. beim Aufrollen der Druckprodukte zu bekannten Wickeln, eine erhebliche Verringerung des Vorrichtungsaufwandes. Weiterhin kann es beim Einsatz des erfindungsgemäßen Bogentransportsystems 1 im Ausleger 70 einer Bogenrotationsdruckmaschine vorteilhaft sein, wenn zusätzlich ein in Fig. 5 nicht dargestellter, über eine vorgeordnete Weiche ansteuerbarer zusätzlicher Schienenpfad im Bereich des Auslegerstapels 72 vorgesehen ist, der in gleicher Weise wie die in Fig. 4 dargestellten Schienenpfade 58 und 60 ausgebildet sein kann und der die Entnahme von Probebogen ohne zusätzliche mechanisch aufwendige Probebogenentnahmeeinrichtungen ermöglicht.

Eine weitere Einsatzmöglichkeit für ein erfindungsgemäßes Bogentransportsystem 1 besteht darin, dieses in einem Anleger 80 einer Bogenrotationsdruckmaschine anzuordnen. Bei dieser, in Fig. 6 gezeigten Ausführungsform der Erfindung sind die Führungsschienen 6a, 6b vorzugsweise als endlose Führungsschienen ausgebildet, die oberhalb des zu bedruckenden Bogenstapels 82 verlaufen. Die Haltemittel 12 können als bekannte Hubsauger 84 ausgebildet sein, die beispielsweise an der in Fig. 1 gezeigten Traverse 16 der Bogentransportvorrichtung 4 befestigt sind und die durch nicht dargestellte Saugluftzufuhreinrichtungen mit Saugluft beaufschlagt werden. Wie in Fig. 6 dargestellt, können mehrere Bogentransportvorrichtungen 4 unabhängig voneinander innerhalb der endlosen Führungsschienen 6a, 6b umlaufen, wobei die Steuerungs- und Regelungseinrichtung 30 die Antriebsstationen 8a, 8b in der Weise steuert und regelt, daß die Geschwindigkeit der Bogentransportvorrichtungen 4 bei Erreichen der Hinterkante 86 des Bogenstapels 82 stark verringert wird, vorzugsweise sogar bis zum Stillstand, so daß beim Ausfahren der Sauger 84 bzw. beim Einschalten der Saugluftversorgung keine oder nahezu keine Relativgeschwindigkeit zwischen dem anzusaugenden Bogen 2 und dem Sauger 84 besteht. Nachdem der zu transportierende Bogen 2 vom Sauger 84 angesogen und vom Stapel 82 abgehoben wurde, wird die Geschwindigkeit der erfindungsgemäßen Transportvorrichtung 4 solange erhöht, bis die Transportvorrichtung und der mit ihr transportierte Bogen 2 die für eine geschuppte Anlage der Bogen erforderliche Schuppengeschwindigkeit besitzt. Die Beschleunigung der erfindungsgemäßen Transportvorrichtung 4 erfolgt dabei vorzugsweise gleichmäßig und besitzt eine solche Größe, daß der transportierte Bogen 2 beim Trennen der Saugluftversorgung in Fig. 6 mit Sicherheit die erforderliche Schuppengeschwindigkeit aufweist. Nach der Trennung der Saugluftversorgung steuert die Steuerungs- und Regelungseinrichtung 30 die Bewegung der erfindungsgemäßen Bogentransportvorrichtung 4 vorzugsweise derart, daß deren Geschwindigkeit zuerst erhöht und anschließend - kurz vor Erreichen der Hinterkante 86 des Bogenstapels 82 - wieder in der zuvor beschriebenen Weise herabgesetzt wird.

Bei sämtlichen zuvor beschriebenen Einsatzmöglichkeiten eines erfindungsgemäßen Bogentransportsystems 1 besteht die Möglichkeit den Bogentransport ausschließlich durch eine einzige Bogentransportvorrichtung 4 durchzuführen. Vorteilhafterweise ist es jedoch vorgesehen, eine größere Anzahl von erfindungsgemäßen Bogentransportvorrichtungen 4 innerhalb der Führungsschienen 6a, 6b zu verwenden, wodurch sich eine gleichförmigere Bewegung derselben ergibt.

Obwohl das erfindungsgemäße Bogentransportsystem 1 zuvor am Beispiel einer Bogenrotationsdruckmaschine 3 beschrieben wurde, läßt sich dieses in gleicher Weise auch in einer bekannten Rollenrotationsdruckmaschine, beispielsweise als Bahneinzugsvorrichtung einsetzen. Hierbei ist es nicht zwingend erforderlich zwei einander gegenüberliegende Führungsschienen zu verwenden, sondern es ist bereits ausreichend, lediglich eine Führungsschiene mit einem darin angeordneten Vortriebselement entlang des Bahneinzugsweges anzuordnen und das vorlaufende Ende der einzuziehenden Papierbahn beispielsweise am Vorsprung 20a, 20b zu befestigen. Das der Erfindung zugrundeliegende Grundprinzip wird hierdurch nicht verlassen.

Schließlich ist es denkbar, die Vortriebselemente des oben genannten Transportsystems zum Antrieb der Transportgreifer in bekannten Weiterverarbeitungsanlagen für Druckerreiprodukte, wie beispielsweise Binderei- und Falzanlagen, einzusetzen. Hierbei können die Transportgreifer zum Halten der Druckereiprodukte beispielsweise jeweils einzeln an den Vorsprüngen 20a, 20b der Vortriebselemente 10a, 10b; 110a, 110b befestigt sein, so daß sich die Bewegung eines jeden Transportgreifers durch die Steuerungeseinrichtung 30 individuell steuern und regeln läßt. Weiterhin kann es hierbei vorteilhaft sein, wie im Falle der zuvor beschriebenen Bahneinzugsvorrichtung ledigich eine einzelne Führungsschiene 6a, 6b anstelle von zwei einander gegenüberliegenden Führungsschienen zu verwenden.

### Bezugszeichenliste

- 1: Bogentransportsystem
- 2: Bogen
- 3: Druckmaschine
- 4: Bogentransportvorrichtung
- 6a: Führungsschiene
- 6b: Führungsschiene
- 8a: Antriebsstation an Führungsschiene 6a
- 8b: Antriebsstation an Führungsschiene 6b
- 8': Antriebsstation vor Weiche in Fig. 4
- 8": Antriebsstation vor Weiche in Fig. 4
- 10a: erstes Vortriebselement in Führungsschiene 6a
- 10b: zweites Vortriebselement in Führungsschiene 6b
- 12: Bogenhaltemittel
- 14: Zangengreifer
- 16: Traverse
- 18a: Gelenk
- 18b: Gelenk
- 20a: Vorsprung
- 20b: Vorsprung
- 22a: Einzelglieder der Gliederkette des ersten Vortriebselementes
- 22b: Einzelglieder der Gliederkette des zweiten Vortriebselementes
- 24a: Gelenk
- 24b: Gelenk
- 26a: Längsschlitz in Führungsschiene 6a
- 26b: Längsschlitz in Führungsschiene 6b
- 28: Spulen
- 30: Steuerungs- und Regelungseinrichtung
- 32: Sensoren
- 50: Gegendruckzylinder des vorgeordneten Druckwerks
- 52: Gegendruckzylinder des nachgeordneten Druckwerks
- 54: Trocknereinrichtung
- 56: Trocknereinrichtung
- 58: erster Schienenpfad
- 60: zweiter Schienenpfad
- 62: Weiche
- 70: Ausleger
- 72: Bogenstapel
- 80: Anleger
- 82: Bogenstapel
- 84: Sauger
- 86: Hinterkante des Bogenstapels
- 110a, 110b: Vortriebselemente der Ausführungsform von Fig. 3
- 118: Schlitze
- 120: Führungskörper
- 122: zusätzliche Führung
- 132: Sensor

- D: Abstand zwischen zwei Antriebsstationen
- L: Länge eines Vortriebselementes

## Patentansprüche

1. Bogentransportsystem (1) für eine Rotationsdruckmaschine (3), mit einer Bogenhaltemittel (12) aufweisenden Bogentransportvorrichtung (4), deren Vortrieb durch ein in einer ersten Führungsschiene (6a) geführtes erstes Vortriebselement (10a) sowie ein in einer im wesentlichen parallel zur ersten Führungsschiene (6a) verlaufenden zweiten Führungsschiene (6b) geführtes zweites Vortriebselement (10b) erfolgt, wobei die ersten und zweiten Vortriebselemente (10a, 10b) die Läufer eines elektrischen Linearantriebs bilden, an den ersten und zweiten Führungsschienen (6a, 6b) mehrere den Stator des Linearantriebs bildende Antriebsstationen (8a, 8b) vorgesehen sind und eine den Antriebsstationen (8a, 8b) zugeordnete Steuerungseinrichtung (30) vorgesehen ist, mit der sich die Bewegung der ersten und zweiten Vortriebselemente (10a, 10b) steuern und regeln läßt,
**dadurch gekennzeichnet,**
daß die ersten und zweiten Vortriebselemente (10a, 10b) durch jeweils mindestens zwei gelenkig (24a, 24b) miteinander verbundene Einzelglieder (22a, 22b) enthaltende Gliederketten aus magnetisierbarem Material gebildet werden, und daß der Abstand (D) der Antriebsstationen (8a, 8b) zueinander zumindest abschnittsweise im wesentlichen kleiner oder gleich der Länge (L) der Vortriebselemente (10a, 10b) ist.

2. Bogentransportsystem (1) für eine Rotationsdruckmaschine (3), mit einer Bogenhaltemittel (12) aufweisenden Bogentransportvorrichtung (4), deren Vortrieb durch ein in einer ersten Führungsschiene (6a) geführtes erstes Vortriebselement (110a) sowie ein in einer im wesentlichen parallel zur ersten Führungsschiene (6a) verlaufenden zweiten Führungsschiene (6b) geführtes zweites Vortriebselement (110b) erfolgt, wobei die ersten und zweiten Vortriebselemente (110a, 110b) die Läufer eines elektrischen Linearantriebs bilden, an den ersten und zweiten Führungsschienen (6a, 6b) mehrere den Stator des Linearantriebs bildende Antriebsstationen (8a, 8b) vorgesehen sind und eine den Antriebsstationen (8a, 8b) zugeordnete Steuerungseinrichtung (30) vorgesehen ist, mit der sich die Bewegung der ersten und zweiten Vortriebselemente (110a, 110b) steuern und regeln läßt,
**dadurch gekennzeichnet,**
daß die ersten und zweiten Vortriebselemente (110a, 110b) durch flexible Bänder aus magnetisierbarem Material gebildet werden, und daß der Abstand (D) der Antriebsstationen (8a, 8b) zueinander zumindest abschnittsweise im wesentlichen kleiner oder gleich der Länge (L) der Vortriebselemente (110a, 110b) ist.

3. Bogentransportsystem nach Anspruch 1 oder 2,
**dadurch gekennzeichnet,**
daß das magnetisierbare Material durch Permanentmagnete gebildet wird oder solche enthält.

4. Bogentransportsystem nach Anspruch 1,
**dadurch gekennzeichnet,**
daß das magnetisierbare Material ein ferromagnetisches Material ist.

5. Bogentransportsystem nach Anspruch 2,
**dadurch gekennzeichnet,**
daß die flexiblen Bänder aus ferromagnetischem Material bestehen oder ein solches enthalten und in den Bändern Schlitze (118) vorgesehen sind.

6. Bogentransportsystem nach einem der vorhergehenden Ansprüche,
**dadurch gekennzeichnet,**
daß dieses zwischen einem vorgeordneten und einem nachgeordneten Druckwerk einer Druckmaschine angeordnet ist und die Bogenhaltemittel (12) durch Greifereinrichtungen (14) gebildet werden, die einen Bogen (2) von Greifereinrichtungen des vorgeordneten Druckwerks übernehmen und an Greifereinrichtungen des nachgeordneten Druckwerks übergeben.

7. Bogentransporsystem nach Anspruch 6,
**dadurch gekennzeichnet,**
daß mehrere Bogentransportvorrichtungen (4) vorgesehen sind, die gleichzeitig miteinander innerhalb der Führungsschienen (6a, 6b) umlaufen.

8. Bogentransportsystem nach einem der Ansprüche 1 bis 4,
**dadurch gekennzeichnet,**
daß dieses im Bereich des Auslegers (70) einer Druckmaschine angeordnet ist und die Bogenhaltemittel (12) durch Greifereinrichtungen (14) gebildet werden, die einen Bogen (2) von einem vorgeordneten Druckwerk übernehmen und auf einem Stapel (72) ablegen.

9. Bogentransportsystem nach Anspruch 8,
**dadurch gekennzeichnet,**
daß mehrere Bogentransportvorrichtungen (4) vorgesehen sind, die gleichzeitig miteinander innerhalb der Führungsschienen (6a, 6b) umlaufen.

10. Bogentransportsystem nach Anspruch 9,
**dadurch gekennzeichnet,**
daß die Steuerungseinrichtung (30) die Bewegung der Vortriebselemente (10a, 10b; 110a, 110b) der Bogentransportvorrichtungen (4) im Bereich des Bogenstapels (72) in der Weise steuert, daß die Abstände zwischen zwei aufeinander folgenden Bogentransportvorrichtungen (4) kleiner sind als die Länge eines transportierten Bogens (2), derart, daß sich eine Schuppenformation der abgelegten Bogen (2) bildet.

11. Bogentransportsystem nach einem der Ansprüche 7 oder 8,
**dadurch gekennzeichnet,**
daß in der Nähe der Führungsschienen (6a, 6b) eine oder mehrere Trocknereinrichtungen (54, 56) vorgesehen sind, an denen die bedruckten Bogen (2) vorbeigeführt werden.

12. Bogentransportsystem nach Anspruch 11,
**dadurch gekennzeichnet,**
daß die ersten und zweiten Führungsschienen (6a, 6b) im Bereich der Trocknereinrichtungen (54, 56) in übereinander verlaufende Schienenpfade (58, 60) aufgeteilt sind, in denen die Geschwindigkeit der Bogentransportvorrichtungen (4) vermindert ist und daß eine Weiche (62) vorgesehen ist, welche aufeinander folgende Bogentransportvorrichtungen (4) abwechselnd den beiden Schienenpfaden (58, 60) zuführt.

13. Bogentransportsystem nach Anspruch 12,
**dadurch gekennzeichnet,**
daß die Schienenpfade (58, 60) im wesentlichen horizontal im Abstand zueinander verlaufen und daß die Trocknereinrichtungen (54, 56) oberhalb und unterhalb eines jeden Pfades (58, 60) in der Weise angeordnet sind, daß die Oberseite und Unterseite eines jeden Bogens (2) gleichzeitig trockenbar sind.

14. Bogentransportsystem nach einem der vorhergehenden Ansprüche,
**dadurch gekennzeichnet,**
daß die Bogenhaltemittel (12) durch Greifereinrichtungen (14) gebildet werden die an einer sich vom ersten Vortriebselement (10a, 110a) zum zweiten Vortriebselement (10b, 110b) erstreckenden Traverse (16) befestigt sind.

15. Bogentransportsystem nach Anspruch 14,
**dadurch gekennzeichnet,**
daß die Traverse (16) gelenkig (18a, 18b) mit dem ersten und zweiten Vortriebselement (10a, 10b; 110a, 110b) verbunden ist.

16. Bogentransportsytem nach einem der Ansprüche 1 bis 4,
**dadurch gekennzeichnet,**
daß dieses im Bereich des Anlegers (80) einer Druckmaschine angeordnet ist und die Bogenhaltemittel (12) der Bogentransportvorrichtung (4) durch Saugeinrichtungen (84) gebildet werden, die die zu transportierenden Bogen (2) von einem Bogenstapel (82) abnehmen und einem ersten Druckwerk der Druckmaschine zuführen.

17. Bogentransportsytem nach Anspruch 16,
**dadurch gekennzeichnet,**
daß die Steuerungseinrichtung (30) die Geschwindigkeit der ersten und zweiten Vortriebselemente (10a, 10b; 110a, 110b) während eines Umlaufs der Bogentransportvorrichtung (4) in der Weise verändert, daß die Geschwindigkeit der Bogentransportvorrichtung (4) beim Ansaugen und Abnehmen eines Bogens (2) vom Bogenstapel (82) verringert wird und anschließend auf einen vorgegebenen Wert erhöht wird.

18. Bogentransportsystem nach Anspruch 17,
**dadurch gekennzeichnet,**
daß die Geschwindigkeit der Bogentransportvorrichtung (4) nach dem Ansaugen des Bogens (2) und vor der Freigabe desselben auf eine Geschwindigkeit erhöht wird, die im wesentlichen der Geschwindigkeit einer durch die Bogen (2) gebildeten Schuppenformation entspricht.

19. Bogentransportsystem nach einem der Ansprüche 16 bis 18,
**dadurch gekennzeichnet,**
daß die Saugeinrichtungen (84) an einer sich vom ersten Vortriebselement (10a, 110a) zum zweiten Vortriebselement (10b, 110b) erstreckenden Traverse (16) befestigt sind.

20. Bogentransportsytem nach Anspruch 19,
**dadurch gekennzeichnet,**
daß die Traverse (16) gelenkig (18a, 18b) mit dem ersten und dem zweiten Vortriebselement (10a, 110a; 10b, 110b) verbunden ist.

21. Bogentransportsytem nach einem der Ansprüche 16 bis 20,
**dadurch gekennzeichnet,**
daß mehrere Bogentransportvorrichtungen (4) vorgesehen sind, die gleichzeitig miteinander innerhalb der Führungsschienen (6a, 6b) umlaufen.

22. Bogentransportsytem nach einem der vorhergehenden Ansprüche,
**dadurch gekennzeichnet,**
daß die Steuerungseinrichtung (30) die Bewegung des ersten und zweiten Vortriebselements (10a, 10b; 110a, 110b) unabhängig voneinander steuert und regelt und daß zur Einstellung des Schrägregisters eines transportierten Bogens (2) die Relativposition zwischen dem ersten Vortriebselement (10a, 110a) und dem zweiten Vortriebselement (10b, 110b) durch die Steuerungseinrichtung (30) verändert wird.

23. Vortriebseinrichtung für ein Transportsystem in einer Rotationsdruckmaschine (3), mit wenigstens einer Führungsschiene (6a, 6b) und einem in der Führungsschiene (6a, 6b) geführten Vortriebselement (10a, 10b), welches den Läufer eines elektrischen Linearantriebs bildet sowie mit außerhalb der Führungsschiene (6a, 6b) angeordneten, elektrische Spulen (28) enthaltenden Antriebsstationen (8a, 8b), welche den Stator des elektrischen Linearantriebs bilden, wobei eine den Antriebsstationen (8a, 8b) zugeordnete Steuerungseinrichtung (30) vorgesehen ist, die die Bewegung des Vortriebselementes (10a, 10b) steuert und regelt,
**dadurch gekennzeichnet,**
daß das Vortriebselement (10a, 10b) durch eine Gliederkette gebildet wird, die jeweils mindestens zwei gelenkig miteinander verbundene Einzelglieder (22a, 22b) aus magnetisierbarem Material aufweist und die Antriebsstationen (8a, 8b) zumindest abschnittsweise in einem Abstand (D) zueinander angeordnet sind, der kleiner oder gleich der Länge (L) des Vortriebselementes (10a, 10b) ist.

24. Vortriebseinrichtung für ein Transportsystem in einer Rotationsdruckmaschine (3), mit wenigstens einer Führungsschiene (6a, 6b) und einem in der Führungsschiene (6a, 6b) geführten Vortriebselement (110a, 110b), welches den Läufer eines elektrischen Linearantriebs bildet sowie mit außerhalb der Führungsschiene (6a, 6b) angeordneten, elektrische Spulen (28) enthaltenden Antriebsstationen (8a, 8b), welche den Stator des elektrischen Linearantriebs bilden, wobei eine den Antriebsstationen (8a, 8b) zugeordnete Steuerungseinrichtung (30) vorgesehen ist, die die Bewegung des Vortriebselements (110a, 110b) steuert und regelt,
**dadurch gekennzeichnet,**
daß das Vortriebselement (110a, 110b) durch ein flexibles mit Schlitzen (118) versehenes Band aus magnetisierbarem Material gebildet wird und die Antriebsstationen (8a, 8b) zumindest abschnittsweise in einem Abstand (D) zueinander angeordnet sind, der kleiner oder gleich der Länge (L) des Vortriebselementes (110a, 110b) ist.

25. Vortriebseinrichtung für ein Transportsystem in einer Rotationsdruckmaschine (3), mit wenigstens einer Führungsschiene (6a, 6b) und einem in der Führungsschiene geführten Vortriebselement (10a, 10b), welches den Läufer eines elektrischen Linearantriebs bildet sowie mit außerhalb der Führungsschiene (6a, 6b) angeordneten, elektrische Spulen (28) enthaltenden Antriebsstationen (8a, 8b), welche den Stator des elektrischen Linearantriebs bilden, wobei eine den Antriebsstationen (8a, 8b) zugeordnete Steuerungseinrichtung (30) vorgesehen ist, die die Bewegung des Vortriebselementes (10a, 10b) steuert und regelt;
**dadurch gekennzeichnet,**
daß das Vortriebselement (10a, 10b) durch eine Gliederkette gebildet wird, die jeweils mindestens zwei gelenkig miteinander verbundene, als geschlossene Leiterschleifen ausgebildete Einzelglieder (22a, 22b) aufweist und daß die Antriebsstationen (8a, 8b) zumindest abschnittsweise in einem Abstand (D) zueinander angeordnet sind, der kleiner oder gleich der Länge (L) des Vortriebselementes (10a, 10b) ist.

26. Bahneinzugsvorrichtung für eine Rollenrotationsdruckmaschine mit einer Vortriebseinrichtung nach einem der Ansprüche 23 bis 25.

27. Transportgreifersystem in einer Weiterverarbeitungseinrichtung für Druckereiprodukte,
**dadurch gekennzeichnet,**
das dieses eine Vortriebseinrichtung nach einem der Ansprüche 23 bis 25 umfaßt.

28. Bogentransportsystem nach einem der Ansprüche 1 bis 22,
**dadurch gekennzeichnet,**
daß der Abstand (D) zwischen zwei Antriebsstationen (8a, 8b) über einen Teilabschnitt der Führungsschienen (6a, 6b) hinweg größer ist als die Länge (L) der Vortriebselemente (10a, 10b; 110a, 110b) derart, daß die Bewegung der Vortriebselemente (10a, 10b; 110a, 110b) in diesem Teilabschnitt im wesentlichen antriebslos allein durch die Bewegungsenergie der Vortriebselemente erfolgt, die den Vortriebselementen in einer vorgeordneten Antriebsstation (8a, 8b) zugeführt wurde.

29. Vortriebseinrichtung nach einem der Ansprüche 23 bis 25,
**dadurch gekennzeichnet,**
daß der Abstand (D) zwischen zwei Antriebsstationen (8a, 8b) über einen Teilabschnitt der Führungsschienen (6a, 6b) hinweg größer ist als die Länge (L) der Vortriebselemente (10a, 10b; 110a, 110b) derart, daß die Bewegung der Vortriebselemente (10a, 10b; 110a, 110b) in diesem Teilabschnitt im wesentlichen antriebslos allein durch die Bewegungsenergie der Vortriebselemente erfolgt, die den Vortriebselementen in einer vorgeordneten Antriebsstation (8a, 8b) zugeführt wurde.

30. Bahneinzugsvorrichtung nach Anspruch 26,
**dadurch gekennzeichnet,**
daß der Abstand (D) zwischen zwei Antriebsstationen (8a, 8b) über einen Teilabschnitt der Führungsschienen (6a, 6b) hinweg größer ist als die Länge (L) der Vortriebselemente (10a, 10b; 110a, 110b) derart, daß die Bewegung der Vortriebselemente (10a, 10b; 110a, 110b) in diesem Teilabschnitt im wesentlichen antriebslos allein durch die Bewegungsenergie der Vortriebselemente erfolgt, die den Vortriebselementen in einer vorgeordneten Antriebsstation (8a, 8b) zugeführt wurde.

31. Transportgreifersystem nach Anspruch 27,
**dadurch gekennzeichnet,**
daß der Abstand (D) zwischen zwei Antriebsstationen (8a, 8b) über einen Teilabschnitt der Führungsschienen (6a, 6b) hinweg größer ist als die Länge (L) der Vortriebselemente (10a, 10b; 110a, 110b) derart, daß die Bewegung der Vortriebselemente (10a, 10b; 110a, 110b) in diesem Teilabschnitt im wesentlichen antriebslos allein durch die Bewegungsenergie der Vortriebselemente erfolgt, die den Vortriebselementen in einer vorgeordneten Antriebsstation (8a, 8b) zugeführt wurde.

## Claims

1. Sheet transport system (1) for a rotary printing machine (3), comprising a sheet transport device (4) having a sheet-holding means (12), the sheet transport device (4) being propulsively driven by a first propulsive drive element (10a) guided in a first guide rail (6a) as well as by second propulsive-drive element (10b) guided in a second guide rail (6b) extending essentially parallel to the first guide rail (6a), whereby the first and the second propulsive-drive elements (10a, 10b) form the rotors of an electric linear drive, at the first and the second guide rails (6a, 6b) there are provided multiple drive stations (8a, 8b) forming the stator of the linear drive, and a control device (30) for controlling and regulating the movement of the first and the second propulsive drive elements (10a, 10b) is assigned to the drive stations (8a, 8b),
**characterized**
in that the first and the second propulsive-drive elements (10a, 10b) are formed by link chains of magnetizable material, respectively including at least two individual links (22a, 22b) articulatedly connected to one another, and that the distance (D) of the drive stations (8a, 8b) between one another, at least in some sections, is essentially less than or equal to the length (L) of the propulsive-drive elements (10a, 10b).

2. Sheet transport system (1) for a rotary printing machine (3), comprising a sheet transport device (4) having a sheet-holding means (12), the sheet transport device (4) being propulsively driven by a first propulsive drive element (110a) guided in a first guide rail (6a) as well as by second propulsive-drive element (110b) guided in a second guide rail (6b) extending essentially parallel to the first guide rail (6a), whereby the first and the second propulsive-drive elements (110a, 110b) form the rotors of an electric linear drive, at the first and the second guide rails (6a, 6b) there are provided multiple drive stations (8a, 8b) forming the stator of the linear drive, and a control device (30) for controlling and regulating the movement of the first and the second propulsive drive elements (110a, 110b) is assigned to the drive stations (8a, 8b),
**characterized**
in that the first and the second propulsive drive elements (110a, 110b) are formed by flexible belts of magnetizable material, and that the distance (D) of the drive stations (8a, 8b) between one another, at least in some sections, is essentially less than or equal to the length (L) of the propulsive-drive elements (110a, 110b).

3. Sheet transport system according to Claim 1 or 2,
**characterized**
in that the magnetizable material is formed with or contains permanent magnets.

4. Sheet transport system according to Claim 1,
**characterized**
in that the magnetizable material is a ferromagnetic material.

5. Sheet transport system according to Claim 2,
**characterized**
in that the flexible belts consist of or contain ferromagnetic material, and that slots (118) are provided in the belts.

6. Sheet transport system according to anyone of the preceding claims,
**characterized**
in that the sheet transport system is arranged between an upstream and a downstream printing unit of a printing machine, and that the sheet-holding means (12) are formed by gripper devices (14) which receive a sheet (2) from gripper devices of the upstream printing unit and transfer the sheet (2) to gripper devices of the downstream printing unit.

7. Sheet transport system according to Claim 6,
**characterized**
in that multiple sheet transport devices (4) are provided which simultaneously revolve together within the guide rails (6a, 6b).

8. Sheet transport system according to anyone of the Claims 1 to 4,
**characterized**
in that the sheet transport system is arranged in a delivery region (70) of a printing machine, and that the sheet-holding means (12) are formed by gripper devices (14) which receive a sheet (2) from an upstream printing unit and deposit the sheet (2) on a pile (72).

9. Sheet transport system according to Claim 8,
**characterized**
in that multiple sheet transport devices (4) are provided which simultaneously revolve together within the guide rails (6a, 6b).

10. Sheet transport system according to Claim 9,
**characterized**
in that the control device (30) controls the movement of the propulsive drive elements (10a, 10b; 110a, 110b) of the sheet transport devices (4) in the region of the sheet pile (72) such, that the distances between two successive sheet transport devices (4) are less than the length of a transported sheet (2), so that an imbricated formation of the deposited sheets (2) is formed.

11. Sheet transport system according to Claim 7 or 8,
**characterized**
in that in the vicinity of the guide rails (6a, 6b) there is provided one or multiple drying devices (54, 56), and that the printed sheets (2) are guided past said drying devices.

12. Sheet transport system according to Claim 11,
**characterized**
in that the first and second guide rails (6a, 6b), in the region of the drying devices (54, 56), are divided into two rail paths (58, 60) running above one another wherein the speed of the sheet transport devices (4) is reduced, and that a diverter (62) is provided which feeds successive sheet transport devices (4) alternately to the two rail paths (58, 60).

13. Sheet transport system according to Claim 12,
**characterized**
in that the rail paths (58, 60) extend essentially horizontally at a distance from one another, and that the drying devices (54, 56) above and below each rail path (58, 60) are arranged such, that the upper side and the underside of each sheet (2) can be dried simultaneously.

14. Sheet transport system according to anyone of the preceding claims,
**characterized**
in that the sheet-holding means (12) are formed by gripper devices (14) fixed to a traverse (16) extending from the first propulsive drive element (10a, 110a) to the second propulsive drive element (10b, 110b).

15. Sheet transport system according to Claim 14,
**characterized**
in that the traverse (16) is articulatedly connected to the first and the second propulsive drive elements (10a, 10b; 110a, 110b).

16. Sheet transport system according to anyone of the Claims 1 to 4,
**characterized**
in that the system is arranged in the region of the feeder (80) of a printing machine, and that the sheet-holding means (12) of the sheet transport device (4) are formed by suction devices (84) which pick up the sheets (2) to be transported from a sheet pile (82) and feed them to a first printing unit of the printing machine.

17. Sheet transport system according to Claim 16,
**characterized**
in that the control device (30) changes the speed of the first and the second propulsive drive elements (10a, 10b; 110a, 110b) during one revolution of the sheet transport device (4) such, that the speed of the sheet transport device (4) is reduced when a sheet (2) is being picked up by suction from the sheet pile (82), and is subsequently increased to a predetermined value.

18. Sheet transport system according to Claim 17,
**characterized**
in that, after the sheet (2) has been picked up by suction and before the sheet (2) has been released, the speed of the sheet transport device (4) is increased to a speed which essentially corresponds with the speed of an imbricated formation formed by the sheets (2).

19. Sheet transport system according to anyone of the Claims 16 to 18,
**characterized**
in that the suction devices (84) are fixed to a traverse (16) extending from the first propulsive drive element (10a, 110a) to the second propulsive drive element (10b, 110b).

20. Sheet transport system according to Claim 19,
**characterized**
in that the traverse (16) is articulatedly connected to the first and the second propulsive drive elements (10a, 110a; 10b, 110b).

21. Sheet transport system according to anyone of the Claims 16 to 20,
**characterized**
in that multiple sheet transport devices (4) are provided which simultaneously revolve together within the guide rails (6a, 6b).

22. Sheet transport system according to anyone of the preceding claims,
**characterized**
in that the control device (30) controls and regulates the movement of the first and the second propulsive drive elements (10a, 10b; 110a, 110b) independently of one another, and that for adjusting the oblique register of a transported sheet (2) the relative position between the first propulsive drive element (10a, 110a) and the second propulsive drive element (10b, 110b) is changed through the control device (30).

23. Propulsive drive device for a transport system in a rotary printing machine (3), comprising at least one guide rail (6a, 6b), a propulsive drive element (10a, 10b) guided in the guide rail (6a, 6b) and forming the rotor of an electric linear drive, as well as drive stations (8a, 8b) arranged outside of the guide rail (6a, 6b) and containing electric coils (28), the drive stations forming the stator of the electric linear drive, whereby a control device (30) for controlling and regulating the movement of the propulsive drive element (10a, 10b) is assigned to the drive stations (8a, 8b),
**characterized**
in that the propulsive drive element (10a, 10b) is formed by a link chain having at least two individual links formed of said magnetizable material, which are articulatedly connected to one another, and that the drive stations (8a, 8b), at least in some sections, are arranged at a distance (D) from one another which is less than or equal to the length (L) of the propulsive-drive element (10a, 10b).

24. Propulsive drive device for a transport system in a rotary printing machine (3), comprising at least one guide rail (6a, 6b), a propulsive drive element (110a, 110b) guided in the guide rail (6a, 6b) and forming the rotor of an electric linear drive, as well as drive stations (8a, 8b) arranged outside of the guide rail (6a, 6b) and containing electric coils (28), the drive stations (8a, 8b) forming the stator of the electric linear drive, whereby a control device (30) for controlling and regulating the movement of the propulsive drive element (110a, 110b) is assigned to the drive stations (8a, 8b),
**characterized**
in that the propulsive drive element (110a, 110b) is formed by a flexible belt of magnetizable material provided with slots (118), and that the drive stations (8a, 8b), at least in some sections, are arranged at a distance (D) from one another which is less than or equal to the length (L) of the propulsive-drive element (110a, 110b).

25. Propulsive drive device for a transport system in a rotary printing machine (3), comprising at least one guide rail (6a, 6b), a propulsive drive element (10a, 10b) guided in the guide rail (6a, 6b) and forming the rotor of an electric linear drive, as well as drive stations (8a, 8b) arranged outside of the guide rail (6a, 6b) and containing electric coils (28), the drive stations (8a, 8b) forming the stator of the electric linear drive, whereby a control device (30) for controlling and regulating the movement of the propulsive drive element (110a, 110b) is assigned to the drive stations (8a, 8b),
**characterized**
in that the propulsive drive element (10a, 10b) is formed by a link chain respectively including at least two individual links (22a, 22b) which are articulatedly connected to one another and constructed as closed electric conductor loops, and that the drive stations (8a, 8b), at least in some sections, are arranged at a distance (D) from one another which is less than or equal to the length (L) of the propulsive-drive element (10a, 10b).

26. Web infeed device for a web-fed rotary printing machine, comprising a propulsive drive device according to anyone of the Claims 23 to 25.

27. Transport gripper system in a further processing device for printed products,
**characterized**
in that the system comprises a propulsive drive device according to anyone of the Claims 23 to 25.

28. Sheet transport system according to anyone of the Claims 1 to 22,
**characterized**
in that the distance (D) between two drive stations (8a, 8b) over a subsection of the guide rails (6a, 6b) is greater than the length (L) of the propulsive drive elements (10a, 10b; 110a, 110b) to such an extent, that the movement of the propulsive drive elements (10a, 10b; 110a, 110b) in this subsection occurs essentially without any drive and solely by virtue of movement energy of the propulsive drive elements, which has been fed to the propulsive drive elements in an upstream drive station (8a, 8b).

29. Propulsive drive device according to anyone of the Claims 23 to 25,
**characterized**
in that the distance (D) between two drive stations (8a, 8b) over a subsection of the guide rails (6a, 6b) is greater than the length (L) of the propulsive drive elements (10a, 10b; 110a, 110b) to such an extent, that the movement of the propulsive drive elements (10a, 10b; 110a, 110b) in this subsection occurs essentially without any drive and solely by virtue of movement energy of the propulsive drive elements, which has been fed to the propulsive drive elements in an upstream drive station (8a, 8b).

30. Web infeed device according to Claim 26,
**characterized**
in that the distance (D) between two drive stations (8a, 8b) over a subsection of the guide rails (6a, 6b) is greater than the length (L) of the propulsive drive elements (10a, 10b; 110a, 110b) to such an extent, that the movement of the propulsive drive elements (10a, 10b; 110a, 110b) in this subsection occurs essentially without any drive and solely by virtue of movement energy of the propulsive drive elements, which has been fed to the propulsive drive elements in an upstream drive station (8a, 8b).

31. Transport gripper system according to Claim 27,
**characterized**
in that the distance (D) between two drive stations (8a, 8b) over a subsection of the guide rails (6a, 6b) is greater than the length (L) of the propulsive drive elements (10a, 10b; 110a, 110b) to such an extent, that the movement of the propulsive drive elements (10a, 10b; 110a, 110b) in this subsection occurs essentially without any drive and solely by virtue of movement energy of the propulsive drive elements, which has been fed to the propulsive drive elements in an upstream drive station (8a, 8b).

## Revendications

1. Système de transport de feuilles (1) pour une machine à imprimer rotative (3), comprenant un dispositif de transport de feuilles (4) qui présente des moyens support de feuilles (12) dont la propulsion est assurée par un premier élément de propulsion (10a) guidé dans un premier rail de guidage (6a), ainsi que par un deuxième élément de propulsion (10b) guidé dans un deuxième rail de guidage (6b) qui s'étend sensiblement parallèlement au premier rail de guidage (6a), dans lequel les premiers et deuxièmes éléments de propulsion (10a, 10b) forment les curseurs d'un entraînement linéaire électrique, plusieurs stations d'entraînement (8a, 8b) formant le stator de l'entraînement linéaire sont prévues le long des premier et deuxième rails de guidage (6a, 6b) et il est prévu un dispositif de commande (30) associé aux stations d'entraînement (8a, 8b) au moyen duquel le mouvement des premiers et deuxièmes éléments de propulsion (10a, 10b) est commandé et réglé,
caractérisé
en ce que les premiers et deuxièmes éléments de propulsion (10a, 10b) sont constitués chacun par au moins deux chaînes à maillons en matière magnétisable, qui comprennent des maillons individuels (22a, 22b) reliés entre eux de façon articulée (24a, 24b) et en ce que la distance d'écartement mutuel (D) des stations d'entraînement (8a, 8b) est, au moins par segments, sensiblement inférieure ou égale à la longueur (L) des éléments de propulsion (10a, 10b).

2. Système de transport de feuilles (1) pour une machine à imprimer rotative (3), comprenant un dispositif de transport de feuilles (4) qui présente des moyens support de feuilles (12) dont la propulsion est assurée par un premier élément de propulsion (110a) guidé dans un premier rail de guidage (6a), ainsi que par un deuxième élément de propulsion (110b) guidé dans un deuxième rail de guidage (6b) qui s'étend sensiblement parallèlement au premier rail de guidage (6a), dans lequel les premiers et deuxièmes éléments de propulsion (110a, 110b) forment les curseurs d'un entraînement linéaire électrique, plusieurs stations d'entraînement (8a, 8b) formant le stator de l'entraînement linéaire sont prévues le long des premier et deuxième rails de guidage (6a, 6b) et il est prévu un dispositif de commande (30) associé aux stations d'entraînement (8a, 8b) au moyen duquel le mouvement des premiers et deuxièmes éléments de propulsion (110a, 110b) est commandé et réglé,
caractérisé
en ce que les premiers et deuxièmes éléments de propulsion (110a, 110b) sont constitués par des bandes flexibles faites d'une matière magnétisable et en ce que la distance d'écartement mutuel (D) des stations d'entraînement (8a, 8b) est, au moins par segments, sensiblement inférieure ou égale à la longueur (L) des éléments de propulsion (110a, 110b).

3. Système de transport de feuilles selon la revendication 1 ou 2,
caractérisé
en ce que la matière magnétisable est formée par des aimants permanents ou en contient.

4. Système de transport de feuilles selon la revendication 1,
caractérisé
en ce que la matière magnétisable est une matière ferromagnétique.

5. Système de transport de feuilles selon la revendication 2,
caractérisé
en ce que les bandes flexibles sont composées d'une matière ferromagnétique ou contiennent une telle matière et des fentes (118) sont prévues dans les bandes.

6. Système de transport de feuilles selon une des revendications précédentes,
caractérisé
en ce qu'il est agencé entre un groupe imprimant amont et un groupe imprimant aval d'une machine à imprimer et les moyens supports de feuilles (12) sont formés par des dispositifs à pinces (14) qui reçoivent une feuille (2) des dispositifs à pinces du groupe imprimant amont et la transfèrent aux dispositifs à pinces du groupe imprimant aval.

7. Système de transport de feuilles selon la revendication 6,
caractérisé
en ce qu'il est prévu plusieurs dispositifs de transport de feuilles (4) qui circulent simultanément entre eux à l'intérieur des rails de guidage (6a, 6b)

8. Système de transport de feuilles selon une des revendications 1 à 4,
caractérisé
en ce qu'il est agencé dans la région de la réception (70) d'une machine à imprimer et les moyens supports de feuilles (12) sont constitués par des dispositifs à pinces (14) qui reçoivent une feuille (2) d'un groupe imprimant amont et la dépose sur une pile (72).

9. Système de transport de feuilles selon la revendication 8,
caractérisé
en ce qu'il est prévu plusieurs dispositifs de transport de feuilles (4) qui circulent simultanément entre eux à l'intérieur des rails de guidage (6a, 6b).

10. Système de transport de feuilles selon la revendication 9,
caractérisé
en ce que le dispositif de commande (30) commande le déplacement des éléments de propulsion (10a, 10b ; 110a, 110b) des dispositifs de transport de feuilles (4) dans la région de la pile de feuilles (72) de telle manière que les distances entre deux dispositifs de transport de feuilles (4) qui se succèdent soient inférieures à la longueur d'une feuille (2) transportée de manière qu'il se forme une formation en nappe des feuilles (2) déposées.

11. Système de transport de feuilles selon une des revendications 7 ou 8,
caractérisé
en ce qu'il est prévu, dans le voisinage des rails de guidage (6a, 6b) un ou plusieurs dispositifs de séchage (54, 56) le long desquels passent les feuilles (2) imprimées.

12. Système de transport de feuilles selon la revendication 11,
caractérisé
en ce que les premier et deuxième rails de guidage (6a, 6b) sont ramifiés, dans la région des dispositifs de séchage (54, 56), en branches de rails (58, 60) qui s'étendent l'une au-dessus de l'autre et dans lesquelles la vitesse des dispositifs de transport de feuilles (4) est diminuée et en ce qu'il est prévu un aiguillage (62) qui envoie alternativement les dispositifs de transport de feuilles (4) qui se succèdent vers les deux branches de rails (58, 60).

13. Système de transport de feuilles selon la revendication 12,
caractérisé
en ce que les branches de rails (58, 60) s'étendent sensiblement horizontalement, à distance l'une de l'autre et en ce que les dispositifs de séchage (54, 56) sont agencés au-dessus et au-dessous de chaque branche (58, 60) de telle manière que la face supérieure et la face inférieure de chaque feuille (2) puissent être séchées simultanément.

14. Système de transport de feuilles selon une des revendications précédentes
caractérisé
en ce que les moyens supports de feuilles (12) sont constitués par des dispositifs à pinces (14) qui sont fixés à une traverse (16) qui s'étend du premier élément de propulsion (10a, 110a) au deuxième élément de propulsion (10b, 110b).

15. Système de transport de feuilles selon la revendication 14,
caractérisé
en ce que la traverse (16) est reliée aux premier et deuxième éléments de propulsion (10a, 10b ; 110a, 110b) de façon articulée (18a, 18b).

16. Système de transport de feuilles selon une des revendications 1 à 4,
caractérisé
en ce qu'il est agencé dans la région du margeur (80) d'une machine à imprimer et les moyens supports de feuilles (12) du dispositif de transport de feuilles (4) sont constitués par des dispositifs à aspiration (84) qui reçoivent les feuilles (2) à transporter d'une pile de feuilles (82) et l'envoient à un premier groupe imprimant de la machine à imprimer.

17. Système de transport de feuilles selon la revendication 16,
caractérisé
en ce que le dispositif de commande (30) fait varier la vitesse des premiers et deuxièmes éléments de propulsion (10a, 10b ; 110a, 110b) pendant un tour du dispositif de transport de feuilles (4) de telle manière que la vitesse du dispositif de transport de feuilles (4) soit réduite lors de l'aspiration et de la prise d'une feuille (2) sur la pile (82) d'une feuille et soit ensuite élevée à une valeur prédéterminée.

18. Système de transport de feuilles selon la revendication 17,
caractérisé
en ce qu'après l'aspiration de la feuille (2) et avant la libération de celle-ci, la vitesse du dispositif de transport de feuilles (4) est élevée à une vitesse qui correspond sensiblement à la vitesse d'une formation en nappe formée par les feuilles (2).

19. Système de transport de feuilles selon une des revendications 16 à 18,
caractérisé
en ce que les dispositifs d'aspiration (84) sont fixés à une traverse (16) qui s'étend du premier élément de propulsion (10a, 110a) au deuxième élément de propulsion (10b, 110b).

20. Système de transport de feuilles selon la revendication 19,
caractérisé
en ce que la traverse (16) est reliée aux premier et deuxième éléments de propulsion (10a, 10b ; 110a, 110b) de façon articulée (18a, 18b).

21. Système de transport de feuilles selon une des revendications 16 à 20,
caractérisé
en ce qu'il est prévu plusieurs dispositif de transport de feuilles (4) qui circulent simultanément entre eux à l'intérieur des rails de guidage (6a, 6b).

22. Système de transport de feuilles selon une des revendications précédentes,
caractérisé
en ce que le dispositif de commande (30) commande et règle le mouvement des premier et deuxième éléments de propulsion (10a, 10b ; 110a, 110b) indépendamment l'un de l'autre et en ce que pour la correction du repérage en biais d'une feuille (2) transportée, la position relative entre le premier élément de propulsion (10a, 110a) et le deuxième élément de propulsion (10b, 110b) est modifiée par le dispositif de commande (30).

23. Dispositif de propulsion pour un système de transport inclus dans une machine à imprimer rotative (3) comprenant au moins un rail de guidage (6a, 6b) et un élément de propulsion (10a, 10b) guidé dans le rail de guidage (6a, 6b) et qui forme le curseur d'un entraînement linéaire électrique, ainsi que des stations d'entraînement (8a, 8b) qui comprennent des bobines électriques (28) disposées à l'extérieur du rail de guidage (6a, 6b), qui forment le stator de l'entraînement électrique linéaire, et dans lequel il est prévu un dispositif de commande (30) associé aux 5 stations d'entraînement (8a, 8b) qui commande et règle le mouvement de l'élément de propulsion (10a, 10b),
caractérisé
en ce que l'élément de propulsion (10a, 10b) est constitué par une chaîne à maillons qui comprend au moins deux maillons individuels (22a, 22b) en matière magnétisable, reliés entre eux de façon articulée et en ce que les stations d'entraînement (8a, 8b) sont disposées, au moins par segments, à une distance d'écartement mutuel (D) qui est inférieure ou égale à la longueur (L) des éléments de propulsion (10a, 10b).

24. Dispositif de propulsion pour un système de transport inclus dans une machine à imprimer rotative (3) comprenant au moins un rail de guidage (6a, 6b) et un élément de propulsion (110a, 110b) guidé dans le rail de guidage (6a, 6b) et qui forme le curseur d'un entraînement linéaire électrique, ainsi que des stations d'entraînement (8a, 8b) qui comprennent des bobines électriques (28) disposées à l'extérieur du rail de guidage (6a, 6b), qui forment le stator de l'entraînement électrique linéaire, et dans lequel il est prévu un dispositif de commande (30) associé aux stations d'entraînement (8a, 8b) qui commande et règle le mouvement de l'élément de propulsion (110a, 110b),
caractérisé
en ce que l'élément de propulsion (110a, 110b) est constitué par une bande flexible en matière magnétisable, munie de fentes (118) et en ce que les stations d'entraînement (8a, 8b) sont disposées, au moins par 5 segments, à une distance d'écartement mutuel (D) qui est inférieure ou égale à la longueur (L) des éléments de propulsion (110a, 110b).

25. Dispositif de propulsion pour un système de transport inclus dans une machine à imprimer rotative (3) comprenant au moins un rail de guidage (6a, 6b) et un élément de propulsion (10a, 10b) guidé dans le rail de guidage et qui forme le curseur d'un entraînement linéaire électrique, ainsi que des stations d'entraînement (8a, 8b) qui comprennent des bobines électriques (28) disposées à l'extérieur du rail de guidage (6a, 6b), qui forment le stator de l'entraînement électrique linéaire, et dans lequel il est prévu un dispositif de commande (30) associé aux stations d'entraînement (8a, 8b) qui commande et règle le mouvement de l'élément de propulsion (10a, 10b),
caractérisé
en ce que l'élément de propulsion (10a, 10b) est constitué par une chaîne à maillons qui comprend au moins deux maillons individuels (22a, 22b) reliés entre eux de façon articulée et constituant des boucles conductrices fermées et en ce que les stations d'entraînement (8a, 8b) sont disposées, au moins par segments, à une distance d'écartement mutuel (D) qui est inférieure ou égale à la longueur (L) des éléments de propulsion (10a, 10b).

26. Dispositif d'introduction de bande pour une machine à imprimer rotative comprenant un dispositif de propulsion selon une des revendications 23 à 25.

27. Système de pinces de transport inclus dans un dispositif de traitement ultérieur pour produits d'imprimerie
caractérisé
en ce qu'il comprend un dispositif de propulsion selon une des revendications 23 à 25.

28. Système de transport de feuilles selon une des revendications 1 à 22,
caractérisé
en ce que, sur tout un segment partiel des rails de guidage (6a, 6b), la distance (D) entre deux stations d'entraînement (8a, 8b) est supérieure à la longueur (L) des éléments de propulsion (10a, 10b ; 110a, 110b), de sorte que le mouvement des éléments de propulsion (10a, 10b ; 110a, 110b) dans ce segment partiel s'effectue sensiblement sans entraînement, sous le seul effet de l'énergie cinétique des éléments de propulsion qui a été imprimée aux éléments de propulsion dans une station d'entraînement (8a, 8b) située en amont.

29. Dispositif de propulsion selon une des revendications 23 à 25,
caractérisé
en ce que, sur tout un segment partiel des rails de guidage (6a, 6b), la distance (D) entre deux stations d'entraînement (8a, 8b) est supérieure à la longueur (L) des éléments de propulsion (10a, 10b ; 110a, 110b), de sorte que le mouvement des éléments de propulsion (10a, 10b ; 110a, 110b) dans ce segment partiel s'effectue sensiblement sans entraînement, sous le seul effet de l'énergie cinétique des éléments de propulsion qui a été imprimée aux éléments de propulsion dans une station d'entraînement (8a, 8b) située en amont.

30. Dispositif d'introduction de bande selon la revendication 26,
caractérisé
en ce que, sur tout un segment partiel des rails de guidage (6a, 6b), la distance (D) entre deux stations d'entraînement (8a, 8b) est supérieure à la longueur (L) des éléments de propulsion (10a, 10b ; 110a, 110b), de sorte que le mouvement des éléments de propulsion (10a, 10b ; 110a, 110b) dans ce segment partiel s'effectue sensiblement sans entraînement, sous le seul effet de l'énergie cinétique des éléments de propulsion qui a été imprimée aux éléments de propulsion dans une station d'entraînement (8a, 8b) située en amont.

31. Système à pinces de transport selon la revendication 27,
caractérisé
en ce que, sur tout un segment partiel des rails de 5 guidage (6a, 6b), la distance (D) entre deux stations d'entraînement (8a, 8b) est supérieure à la longueur (L) des éléments de propulsion (10a, 10b ; 110a, 110b), de sorte que le mouvement des éléments de propulsion (10a, 10b ; 110a, 110b) dans ce segment partiel s'effectue sensiblement sans o entraînement, sous le seul effet de l'énergie cinétique des éléments de propulsion qui a été imprimée aux éléments de propulsion dans une station d'entraînement (8a, 8b) située en amont
